# EUROPEAN PATENT SPECIFICATION

(11) **EP 4 434 896 B1**
(45) Date of publication and mention of the grant of the patent: **23.07.2025**
(21) Application number: 23382259.2
(22) Date of filing: 21.03.2023
(51) Int. Cl.: B64G 1/22

(54) **FOLD-OUT ARTICULATED ARM, FOR USE IN SPACE EQUIPMENT**
AUSKLAPPBARER GELENKARM ZUR VERWENDUNG IN RAUMFAHRTAUSRÜSTUNG
BRAS ARTICULÉ DÉPLIABLE, DESTINÉ À ÊTRE UTILISÉ DANS UN ÉQUIPEMENT SPATIAL

(43) Date of publication of application: 25.09.2024
(73) Proprietor: Ingenieria Prosix S.L., 20013 San Sebastian (ES)
(72) Inventor: Pipó Benito, Alvaro, Donostia-San Sebastián (ES); Capellán Altolaguirre, Telmo, Donostia-San Sebastián (ES)
(74) Representative: Isern Patentes y Marcas S.L.

(56) References cited:
- US-A1- 2010 163 684
- US-A1- 2017 175 806
- US-A1- 2020 223 563
- US-B1- 6 321 503
- US-B1- 6 343 442

## Description

### OBJECT OF THE INVENTION

The object of the present invention is of special use in the technological field of aerospace engineering, specifically in the sector of parts or pieces for space equipment. The present invention relates to an articulated arm, made of a composite material, such as carbon fibre with epoxy, for use in space equipment that is launched folded and is unfolded in space, which incorporates a metal element in its joint that ensures the unfolding movement of the arm and the possible folding thereof under external conditions of extreme temperature in space.

### BACKGROUND OF THE INVENTION

The use of tubular bodies made of composite material that form part of articulated arms used to deploy space equipment once same is in orbit is known in the state of the art, see e.g. US 2010/163684 A1.

Said arms are initially folded in the space craft before being launched into space to occupy a reduced space, and once the desired location is reached, they can be deployed through the action of a pyrotechnics mechanism, as happens, for example, in the arms that hold the mirrors of a satellite the equipment then remaining deployed during the orbital displacement cycle.

However, these tubular bodies have various problems due to the material with which they are manufactured. One of them is thermal stability, in the face of extreme temperature conditions existing in space, since they can reach between -200 °C and +200 °C. Under these conditions, the composite material may suffer deformations and it may be the case that full unfolding of the arms does not occur, with the problems that this entails.

Moreover, there is also another problem arising from the impossibility of controlling the unfolding, an unfolding being common in this type of elements that ends in a voltage surge, which implies the possibility of structural failures that may affect the operation of the space equipment.

### DESCRIPTION OF THE INVENTION

The present invention relates to a fold-out articulated arm, for use in space equipment, which comprises a tubular body made of composite material, such as carbon fibre with epoxy, which integrates at least one strap of metal material practically unalterable under these temperature conditions, which guarantees the unfolding of the articulated arm in space.

The tubular body comprises a first rigid section and a second rigid section, provided with distal ends and facing proximal ends, and a hinged area located between both rigid sections, formed by at least two flexible laminar portions that join the proximal ends of the two rigid sections, allowing the folding and unfolding of the first rigid section with respect to the second.

In accordance with the present invention, the articulated arm additionally comprises reinforcements, associated with each of the rigid sections, and, at least, the aforementioned metal strap, which is flexible, is joined at its ends to one of the reinforcements and passes through a slot that the other reinforcement incorporates to facilitate the extension or retraction of the strap during its folding or unfolding.

The metal strap facilitates the folding and unfolding of the first rigid section with respect to the second by transmitting bending stresses to said sections, under extreme temperature conditions, overcoming the defects associated with the possible structural degradation of the material of the tubular body.

In this way, with a metallic material that is practically unalterable at these extreme temperatures and sudden changes in temperature, it is guaranteed that the articulated arm will unfold.

Optionally, the possibility is contemplated that the arm incorporates two parallel straps, located between the reinforcements, as well as that one of the straps is made of a metal material and the other strap is made of a material different from the previous one.

The rigid sections preferably have a circular tubular cross section, the reinforcements can be located at the proximal ends of the rigid sections and said reinforcements can be bushings fitted inside the rigid sections, with a diametrical geometry, the external diameter of which is complementary to the internal diameter of each rigid section of the tubular body, as well as the reinforcements can incorporate a central opening to facilitate the passage of cables or others.

The articulated arm object of the invention may additionally comprise a tie rod, such as a cable, a chain, a rope, etc.; and at least one traction mechanism associated with that tie rod that is conveniently linked to at least the first rigid section to facilitate its controlled unfolding/folding with regard to the second rigid section.

The traction mechanism comprises a pulley, for example, on which the tie rod is wound, the movement of which is controlled by an eddy current type motor or by a viscous brake, for example which initially keeps the tie rod tensioned in the folded situation of the tubular body. In this folded position, the rigid sections can be linked by a joining element associated with a pyrotechnic device, position in which the equipment to be released into space is normally transported.

Once in space, when the articulated arm is to be unfolded, the pyrotechnic device is actuated which releases the first rigid section with respect to the second, and the traction mechanism progressively releases the tie rod in a controlled manner until the tubular body is unfolded.

Optionally, and in order to facilitate the unfolding of the articulated arm in space, the possibility is contemplated that one of the laminar portions is made of a flexible resin and the other laminar portion is made of a rigid resin.

Preferably, the tie rod is linked to the first rigid section at its distal end and it protracts until it is linked to one of the laminar portions. In this situation, when the first section is initially folded, the traction mechanism is tensioning the tie rod. From this position, when the arm is to be unfolded, the traction mechanism gradually releases the tie rod so that the first rigid section progressively tilts around the hinged area until it is in a collinear position with the second rigid section, thus achieving the total unfolding of the tubular body in a controlled manner.

In another embodiment, two tie rods and two traction mechanisms can be used, wherein one of the tie rods is joined to the first rigid section and the other tie rod is joined to one of the laminar portions, so that, as the straps are released from each of the traction mechanisms, the tilting movement of the first rigid section with respect to the second will be facilitated, and, consequently, the controlled and coordinated unfolding of the tubular body.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of the articulated arm in the deployed position.
Figure 2 shows a perspective view of the reinforcements and the metal strap associated with the reinforcements.
Figure 3 shows a detailed lateral cross-sectional view of the articulated arm.
Figure 4 shows a lateral view from a first embodiment of the articulated arm in a folded position in which it is tensioned with a traction mechanism.
Figure 5 shows a lateral view of the first embodiment of the articulated arm during its unfolding.
Figure 6 shows a cross-sectional lateral view of the first embodiment of the articulated arm in the unfolded position.
Figure 7 shows a lateral view of a second embodiment of the articulated arm in a folded position in which it is tensioned with a traction mechanism.
Figure 8 shows a lateral view of the second embodiment of the articulated arm during its unfolding.
Figure 9 shows a cross-sectional lateral view of the second embodiment of the articulated arm in the unfolded position.
Figure 10 shows a lateral view of a third embodiment of the articulated arm in a folded position in which it is tensioned with two traction mechanisms.
Figure 11 shows a lateral view of the third embodiment of the articulated arm during its unfolding.
Figure 12 shows a cross-sectional lateral view of the third embodiment of the articulated arm in the unfolded position.
Figure 13 shows a lateral view of a fourth embodiment of the articulated arm in a folded position in which it is tensioned with two traction mechanisms.
Figure 14 shows a lateral view of the fourth embodiment of the articulated arm during its unfolding.
Figure 15 shows a cross-sectional lateral view of the fourth embodiment of the articulated arm in the unfolded position.
Figure 16 shows a lateral view of a fifth embodiment of the articulated arm in a folded position in which it is tensioned with two traction mechanisms.
Figure 17 shows a lateral view of the fifth embodiment of the articulated arm during its unfolding.
Figure 18 shows a cross-sectional lateral view of the fifth embodiment of the articulated arm in the unfolded position.

### PREFERRED EMBODIMENT OF THE INVENTION

With the aid of the figures, a preferred embodiment of the fold-out articulated arm object of this invention is described below.

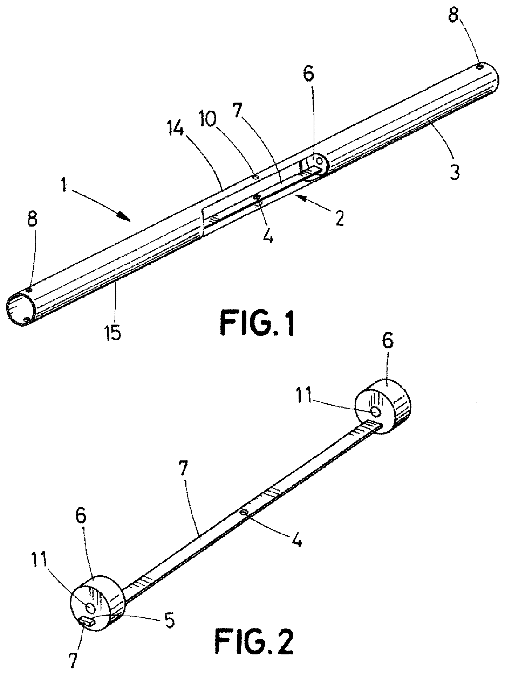

Figure 1 shows an upper perspective view of the fold-out articulated arm, formed by a tubular body (1) made of composite material, preferably carbon fibre with epoxy, which is equipped with a first rigid section (3) and a second rigid section (15) that are equipped with distal ends, and facing proximal ends, and a hinged area (2) located between both rigid sections (3, 15) which is formed by at least two flexible laminar portions (14) that join the proximal ends of both rigid sections (3, 15).

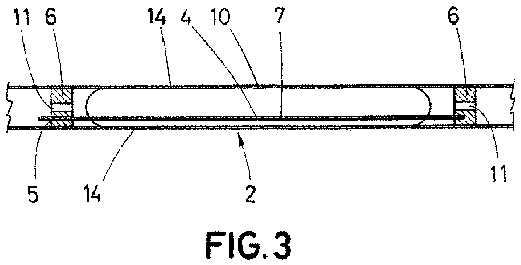

Figure 2 shows reinforcements (6) that are linked to each of the rigid sections (3, 15), as seen in Figure 3, and a flexible metal strap (7) linked by its ends to both reinforcements (6), which, as can be seen in Figure 3, protracts close to one of the laminar portions (14).

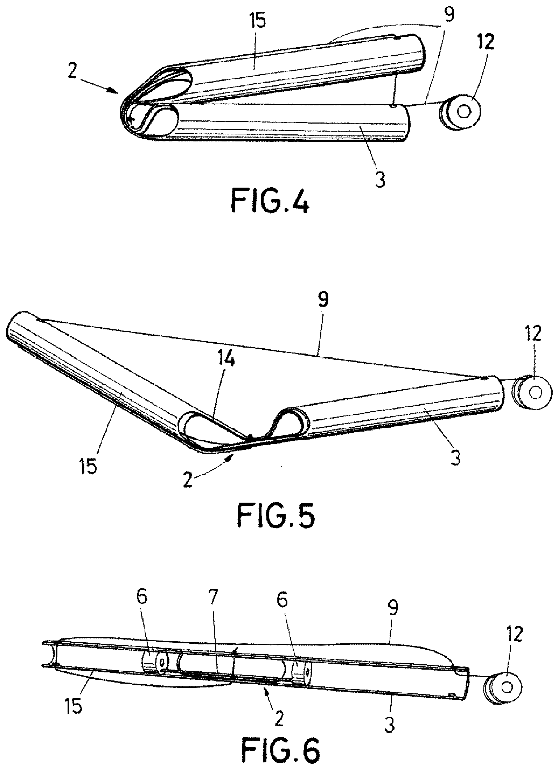

Figures 1 to 3 show the metal strap (7) in a straight position, corresponding to the unfolded situation of the articulated arm. Figure 4 shows that the metal strap (7) is initially bent and tensioned, and that in Figure 5, once this folding situation is released, it favours the unfolding of the first rigid section (3) with respect to the second rigid section (15) around the hinged area (2) to recover its straight position, this movement being reproduced for whatever temperature in the environment in which the articulated arm is located, due to the metallic nature of the metal strap (7).

In Figure 3, it can be seen that the reinforcements (6) are located at the proximal ends of the rigid sections (3, 15), said reinforcements (6) able to be bushings (6), as can be seen in Figure 2, coupled inside the rigid sections (3, 15), wherein each bushing (6) has a central opening (11) that allows the passage of cables and other elements

The strap (7) is fixed to one of the bushings (6) and the other bushing (6) has a through slot (5) that facilitates the extension or retraction movement of the strap (7) during its folding or unfolding.

Moreover, it should be noted that in order to facilitate the unfolding of the articulated arm, same has at least one tie rod (9), as can be seen in Figure 4, and that the rigid sections (3, 15) have first facing holes (8) at their distal ends, as well as the laminar portions (14) have second centred holes (10) and the strap (7) has a third central hole (4), said holes (8, 10, 4) being intended to facilitate the passage or tying of the tie rod (9).

Figures 4, 5 and 6 show the unfolding process of a first embodiment of the articulated arm, which comprises a tie rod (9) and a traction mechanism that actuates a first pulley (12) in which this tie rod (9) is wound, wherein the tie rod (9), as can be seen in Figure 6, goes through a first hole (8) of the first rigid section (3), as well as then goes through the first two holes (8) of the second rigid section (15) and protracts through the second hole (10) of one of the laminar portions (14), to then pass through the central hole (4) of the strap (7) until being tied in the other second hole (10) of the other laminar portion (14), such that, as can be seen in figures 4 to 6, as the first pulley (12) progressively releases the tie rod (9), the controlled unfolding of the first rigid section (3) with respect to the second rigid section (15) is caused until reaching the unfolded position of Figure 6.

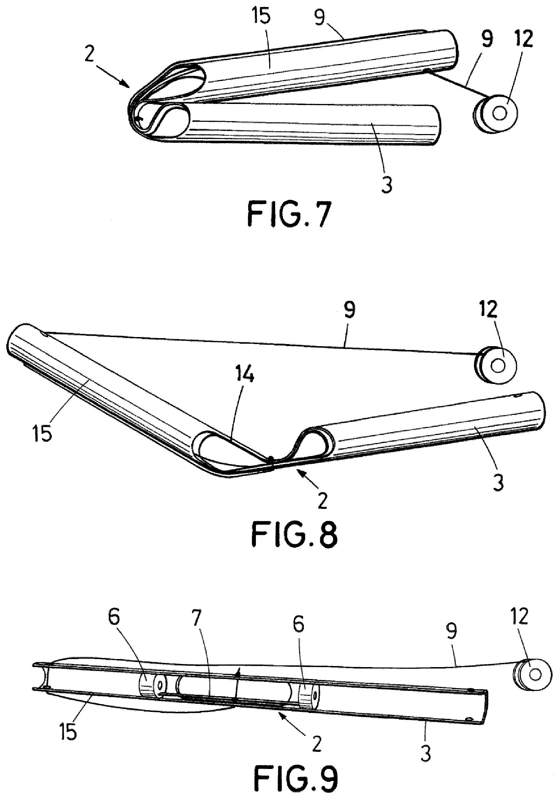

In the case of figures 7 to 9, a second embodiment of the articulated arm is observed in which the tie rod (9), as seen in Figure 9, goes through the first two holes (8) of the second rigid section (15) and it protracts through the second hole (10) of one of the laminar portions (14), to then go through the central hole (4) of the strap (7) until being tied in the other second hole (10) of the other laminar portion (14), such that, as can be seen in figures 7 to 9, as the first pulley (12) progressively releases the tie rod (9), the controlled unfolding of the first rigid section (3) with respect to the second rigid section (15) is caused until reaching the unfolded position of Figure 9.

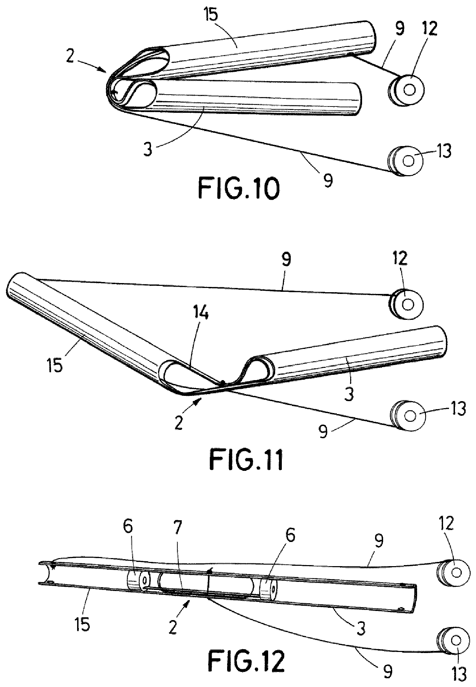

In the case of figures 10 to 12, a third embodiment of the articulated arm is observed in which the tie rod (9), as seen in Figure 11, is tied to a first hole (8) of the second rigid section (15), and includes a second pulley (13) with another tie rod (9) that goes through a second hole (10) of one of the laminar portions (14), to then go through the central hole (4) of the strap (7) until it is tied in the other second hole (10) of the other laminar portion (14), such that, as can be seen in figures 10 to 12, as the pulleys (12, 13) progressively release their respective tie rod (9), the controlled unfolding of the first rigid section (3) with respect to the second rigid section (15) is caused until reaching the unfolded position of Figure 12.

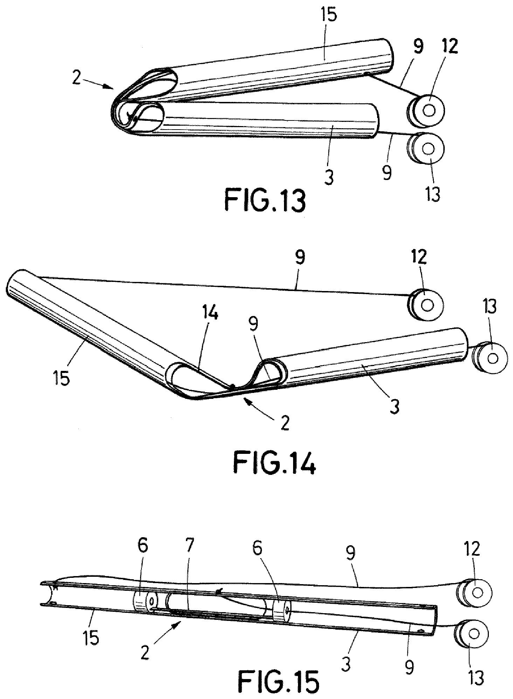

In the case of figures 13 to 15, a fourth embodiment of the articulated arm is observed in which the tie rod (9), as seen in Figure 14, is tied to a first hole (8) of the second rigid section (15), and includes a second pulley (13) with another tie rod (9) that is inserted interiorly through the first rigid section (3), goes through the central opening (11) of the reinforcement (6) and is tied in the second hole (10) of the upper laminar portion (14), such that, as can be seen in figures 13 to 15, as the pulleys (12, 13) progressively release their respective tie rod (9), the controlled unfolding of the first rigid section (3) with respect to the second rigid section (15) is caused until reaching the unfolded position of Figure 15.

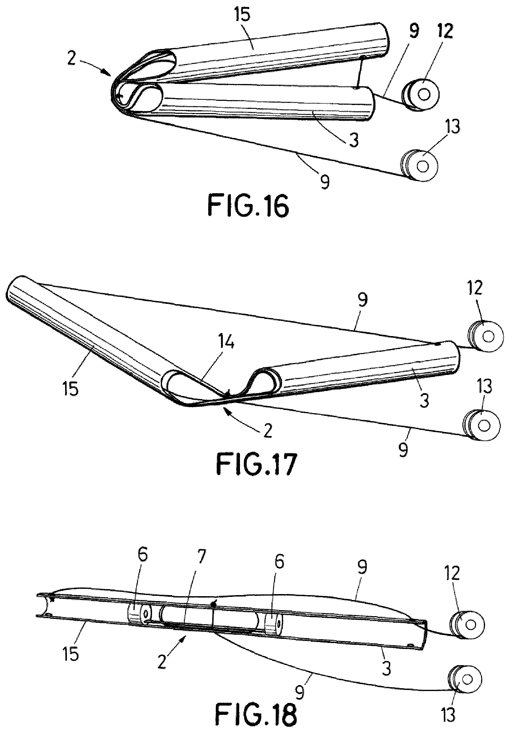

In the case of figures 16 to 17, a fifth embodiment of the articulated arm can be seen in which the tie rod (9), as seen in Figure 17, goes through a first hole (8) of the first rigid section (3) and it is tied to a first hole (8) of the second rigid section (15), and includes a second pulley (13) with another tie rod (9) that is inserted interiorly through the first rigid section (3), goes through a second hole (10) of one of the laminar portions (14), to then go through the central hole (4) of the strap (7) until it is tied in the other second hole (10) of the other laminar portion (14), such that, as can be seen in figures 16 to 18, as the pulleys (12, 13) progressively release their respective tie rod (9), the controlled unfolding of the first rigid section (3) with respect to the second rigid section (15) is caused until reaching the unfolded position shown in Figure 18.

## Claims

1. A fold-out articulated arm, for use in space equipment, comprising a tubular body (1) made of composite material comprising:
- a first rigid section (3) and a second rigid section (15) provided with distal ends and with facing proximal ends, and
- a hinged area (2) located between both rigid sections (3, 15) which is formed by at least two flexible laminar portions (14) that join the proximal ends of both rigid sections (3, 15),
**characterised in that** the fold-out articulated arm additionally comprises:
- respective reinforcements (6), each of them coupled inside one of the rigid sections (3, 15), and
- at least one flexible metal strap (7) equipped with ends, wherein each end is linked to one of said reinforcements (6), which favours the unfolding of the first rigid section (3) with respect to the second rigid section (15) around the hinged area (2) under extreme temperature conditions.

2. The fold-out articulated arm of claim 1 wherein the reinforcements (6) are located at the proximal ends of the rigid sections (3, 15).

3. The fold-out articulated arm of claim 1 wherein the strap (7) is fixed to one of the reinforcements (6), and the other reinforcement (6) has at least one through slot (5) that facilitates the extension or retraction movement of the strap (7) during its folding or unfolding.

4. The fold-out articulated arm of claim 1 comprising an additional strap parallel to the metal strap (7), made of a material other than the material of the metal strap (7).

5. The fold-out articulated arm of claim 4 wherein the additional strap is made of a non-metal material.

6. The fold-out articulated arm of claim 1 wherein one of the laminar portions (14) is made of a flexible resin and the other laminar portion (14) is made of a rigid resin.

7. The fold-out articulated arm of claim 1 wherein the reinforcement (6) is equipped with a central opening (11) that allows the passage of cables and other elements.

8. The fold-out articulated arm of claim 1 wherein the rigid sections (3, 15) have a circular tubular section.

9. The fold-out articulated arm of claim 1, which additionally comprises at least one tie rod (9) linked to the tubular body (1), and at least one traction mechanism comprising a first pulley (12) on which the tie rod (9) is wound, for initially keeping the tie rod (9) tensioned in the folded situation of the tubular body, and for releasing the first rigid section (3) with respect to the second rigid section (15), progressively releasing the tie rod (9) in a controlled manner until the tubular body is unfolded.

10. The fold-out articulated arm of claim 9 wherein the rigid sections (3, 15) have first facing holes (8) at their distal ends, as well as the laminar portions (14) have second centred holes (10) and the strap (7) has a third central hole (4), said holes (8, 10, 4) to facilitate the passage or tying of the tie rod (9).

11. The fold-out articulated arm of claim 10 wherein the tie rod (9) goes through a first hole (8) of the first rigid section (3), as well as then goes through the first two holes (8) of the second rigid section (15) and protracts through the second hole (10) of one of the laminar portions (14), to then go through the central hole (4) of the strap (7) until being tied in the other second hole (10) of the other laminar portion (14),

12. The fold-out articulated arm of claim 10 wherein the tie rod (9) goes through the first two holes (8) of the second rigid section (15) and protracts through the second hole (10) of one of the laminar portions (14), to then go through the central hole (4) of the strap (7) until being tied in the other second hole (10) of the other laminar portion (14).

13. The fold-out articulated arm of claim 10 wherein the tie rod (9) is tied to a first hole (8) of the second rigid section (15), and includes a second pulley (13) with another tie rod (9) that goes through a second hole (10) of one of the laminar portions (14), to then go through the central hole (4) of the strap (7) until being tied in the other second hole (10) of the other laminar portion (14).

14. The fold-out articulated arm of claims 10 and 7 wherein the tie rod (9) is tied to a first hole (8) of the second rigid section (15), and has a second pulley (13) with another tie rod (9) that is inserted interiorly through the first rigid section (3), goes through the central opening (11) of the reinforcement (6) and is tied in the second hole (10) of the upper laminar portion (14).

15. The fold-out articulated arm of claim 10 wherein the tie rod (9) goes through a first hole (8) of the first rigid section (3) and is tied to a first hole (8) of the second rigid section (15), and has the second pulley (13) with another tie rod (9) that goes through a second hole (10) of one of the laminar portions (14), to then go through the central hole (4) of the strap (7) until being tied in the other second hole (10) of the other laminar portion (14).

## Patentansprüche

1. Ausklappbarer Gelenkarm zur Verwendung in einer Raumfahrtausrüstung, umfassend einen rohrförmigen Körper (1) aus Verbundwerkstoff, welcher Folgendes umfasst:
- einen ersten starren Abschnitt (3) und einen zweiten starren Abschnitt (15), die mit distalen Enden und mit einander zugewandten proximalen Enden versehen sind, und
- einen zwischen den beiden starren Abschnitten (3, 15) angeordneten Gelenkbereich (2), der aus mindestens zwei flexiblen Lamellenabschnitten (14) besteht, welche die proximalen Enden der beiden starren Abschnitte (3, 15) verbinden,
**dadurch gekennzeichnet, dass** der ausklappbare Gelenkarm zusätzlich Folgendes umfasst:
- entsprechende Verstärkungen (6), die jeweils innen mit einem der starren Abschnitte (3, 15) verbunden sind, und
- mindestens ein flexibles Metallband (7), das mit Enden versehen ist, wobei jedes Ende mit einer der Verstärkungen (6) verbunden ist, was das Ausklappen des ersten starren Abschnitts (3) gegenüber dem zweiten starren Abschnitt (15) um den Gelenkbereich (2) unter extremen Temperaturbedingungen begünstigt.

2. Ausklappbarer Gelenkarm nach Anspruch 1, wobei die Verstärkungen (6) an den proximalen Enden der starren Abschnitte (3, 15) angeordnet sind.

3. Ausklappbarer Gelenkarm nach Anspruch 1, wobei der Gurt (7) an einer der Verstärkungen (6) befestigt ist und die andere Verstärkung (6) mindestens einen Durchgangsschlitz (5) aufweist, der die Aus- oder Einfahrbewegung des Gurtes (7) während seines Ein- oder Ausklappens erleichtert.

4. Ausklappbarer Gelenkarm nach Anspruch 1, umfassend einen zusätzlichen Gurt, der parallel zu dem Metallgurt (7) verläuft und aus einem anderen Material als der Metallgurt (7) besteht.

5. Ausklappbarer Gelenkarm nach Anspruch 4, wobei der zusätzliche Gurt aus einem nichtmetallischen Material besteht.

6. Ausklappbarer Gelenkarm nach Anspruch 1, wobei einer der Lamellenabschnitte (14) aus einem flexiblen Harz und der andere Lamellenabschnitt (14) aus einem Hartharz besteht.

7. Ausklappbarer Gelenkarm nach Anspruch 1, wobei die Verstärkung (6) mit einer zentralen Öffnung (11) ausgestattet ist, die den Durchgang von Kabeln und anderen Elementen ermöglicht.

8. Ausklappbarer Gelenkarm nach Anspruch 1, wobei die starren Abschnitte (3, 15) einen kreisförmigen Rohrquerschnitt aufweisen.

9. Ausklappbarer Gelenkarm nach Anspruch 1, der außerdem mindestens eine mit dem rohrförmigen Körper (1) verbundene Zugstange (9) und mindestens einen Zugmechanismus umfasst, welcher eine erste Umlenkrolle (12) umfasst, auf welche die Zugstange (9) aufgewickelt ist, um die Zugstange (9) im eingeklappten Zustand des rohrförmigen Körpers zunächst gespannt zu halten und um den ersten starren Abschnitt (3) in Bezug auf den zweiten starren Abschnitt (15) zu lösen, wobei die Zugstange (9) schrittweise und kontrolliert gelöst wird, bis der rohrförmige Körper aufgeklappt ist.

10. Ausklappbarer Gelenkarm nach Anspruch 9, wobei die starren Abschnitte (3, 15) an ihren distalen Enden erste, einander zugewandte Löcher (8) und die Lamellenabschnitte (14) zweite, zentrierte Löcher (10) aufweisen und der Gurt (7) ein drittes, zentrales Loch (4) besitzt, wobei die Löcher (8, 10, 4) den Durchgang oder das Befestigen der Zugstange (9) erleichtern.

11. Ausklappbarer Gelenkarm nach Anspruch 10, wobei die Zugstange (9) durch ein erstes Loch (8) des ersten starren Abschnitts (3) sowie durch die ersten beiden Löcher (8) des zweiten starren Abschnitts (15) verläuft und durch das zweite Loch (10) eines der Lamellenabschniite (14) vorsteht, um dann durch das zentrale Loch (4) des Gurtes (7) zu gehen, bis sie im anderen zweiten Loch (10) des anderen Lamellenabschnitts (14) befestigt wird.

12. Ausklappbarer Gelenkarm nach Anspruch 10, wobei die Zugstange (9) durch die ersten beiden Löcher (8) des zweiten starren Abschnitts (15) verläuft und durch das zweite Loch (10) eines der Lamellenabschniite (14) vorsteht, um dann durch das zentrale Loch (4) des Gurtes (7) zu gehen, bis sie im anderen zweiten Loch (10) des anderen Lamellenabschnitts (14) befestigt wird.

13. Ausklappbarer Gelenkarm nach Anspruch 10, wobei die Zugstange (9) an einem ersten Loch (8) des zweiten starren Abschnitts (15) befestigt ist und eine zweite Umlenkrolle (13) mit einer weiteren Zugstange (9) aufweist, die durch ein zweites Loch (10) eines der Lamellenabschnitte (14) verläuft, dann durch das zentrale Loch (4) des Gurts (7) verläuft, und dann in dem anderen zweiten Loch (10) des anderen Lamellenabschnitt (14) befestigt wird.

14. Ausklappbarer Gelenkarm nach Anspruch 10 und 7, wobei die Zugstange (9) in einem ersten Loch (8) des zweiten starren Abschnitts (15) befestigt ist und eine zweite Umlenkrolle (13) mit einer weiteren Zugstange (9) aufweist, die innen durch den ersten starren Abschnitt (3) eingeführt ist, durch die zentrale Öffnung (11) der Verstärkung (6) verläuft und im zweiten Loch (10) des oberen Lamellenabschnitts (14) befestigt ist.

15. Ausklappbarer Gelenkarm nach Anspruch 10, wobei die Zugstange (9) durch ein erstes Loch (8) des ersten starren Abschnitts (3) verläuft und mit einem ersten Loch (8) des zweiten starren Abschnitts (15) verbunden ist und die zweite Umlenkrolle (13) mit einer weiteren Zugstange (9) versehen ist, die durch ein zweites Loch (10) eines der Lamellenabschnitte (14) verläuft, um dann durch das zentrale Loch (4) des Gurtes (7) zu verlaufen, bis sie in dem anderen zweiten Loch (10) des anderen Lamellenabschnitts (14) verbunden ist.

## Revendications

1. Bras articulé repliable, destinée à être utilisée dans un équipement spatial, comprenant un corps tubulaire (1) constitué de matériau composite comprenant :
- une première section rigide (3) et une seconde section rigide (15) pourvues d'extrémités distales et d'extrémités proximales en regard, et
- une zone à charnière (2) située entre les deux sections rigides (3, 15) qui est formée par au moins deux parties laminaires flexibles (14) qui joignent les extrémités proximales des deux sections rigides (3, 15),
**caractérisé en ce que** le bras articulé repliable comprend de plus :
- des renforts respectifs (6), chacun d'entre eux accouplé à l'intérieur d'une des sections rigides (3, 15), et
- au moins une sangle métallique flexible (7) équipée d'extrémités, dans lequel chaque extrémité est reliée à l'un desdits renforts (6), ce qui favorise le dépliage de la première section rigide (3) par rapport à la seconde section rigide (15) autour de la zone à charnière (2) dans des conditions de température extrêmes.

2. Bras articulé repliable selon la revendication 1, dans lequel les renforts (6) sont situés au niveau des extrémités proximales des sections rigides (3, 15).

3. Bras articulé repliable selon la revendication 1, dans lequel la sangle (7) est fixée à l'un des renforts (6), et l'autre renfort (6) a au moins une fente traversante (5) qui facilite le déplacement d'extension ou de rétraction de la sangle (7) lors de son pliage ou de son dépliage.

4. Bras articulé repliable selon la revendication 1 comprenant une sangle supplémentaire parallèle à la sangle métallique (7), constituée d'un matériau autre que le matériau de la sangle métallique (7).

5. Bras articulé repliable selon la revendication 4, dans lequel la sangle supplémentaire est constituée d'un matériau non métallique.

6. Bras articulé repliable selon la revendication 1 dans lequel l'une des parties laminaires (14) est constituée d'une résine flexible et l'autre partie laminaire (14) est constituée d'une résine rigide.

7. Bras articulé repliable selon la revendication 1 dans lequel le renfort (6) est équipé d'une ouverture centrale (11) qui permet le passage de câbles et d'autres éléments.

8. Bras articulé repliable selon la revendication 1, dans lequel les sections rigides (3, 15) ont une section tubulaire circulaire.

9. Bras articulé repliable selon la revendication 1, qui comprend de plus au moins un tirant (9) relié au corps tubulaire (1), et au moins un mécanisme de traction comprenant une première poulie (12) sur laquelle le tirant (9) est enroulé, pour maintenir initialement le tirant (9) sous tension dans la situation pliée du corps tubulaire, et pour libérer la première section rigide (3) par rapport à la seconde section rigide (15), relâchant progressivement le tirant (9) de manière contrôlée jusqu'à ce que le corps tubulaire soit déplié.

10. Bras articulé repliable selon la revendication 9, dans lequel les sections rigides (3, 15) ont des premiers trous en regard (8) au niveau de leurs extrémités distales, puis les parties laminaires (14) ont des deuxièmes trous centrés (10) et la sangle (7) a un troisième trou central (4), lesdits trous (8, 10, 4) pour faciliter le passage ou la fixation du tirant (9).

11. Bras articulé repliable selon la revendication 10, dans lequel le tirant (9) passe à travers un premier trou (8) de la première section rigide (3), puis passe à travers les deux premiers trous (8) de la seconde section rigide (15) et se prolonge à travers le deuxième trou (10) de l'une des parties laminaires (14), puis passe à travers le trou central (4) de la sangle (7) jusqu'à être fixé dans l'autre deuxième trou (10) de l'autre partie laminaire (14).

12. Bras articulé repliable selon la revendication 10, dans lequel le tirant (9) passe à travers les deux premiers trous (8) de la seconde section rigide (15) et se prolonge à travers le deuxième trou (10) de l'une des parties laminaires (14), puis passe à travers le trou central (4) de la sangle (7) jusqu'à être fixé dans l'autre deuxième trou (10) de l'autre partie laminaire (14).

13. Bras articulé repliable selon la revendication 10, dans lequel le tirant (9) est attaché à un premier trou (8) de la seconde section rigide (15), et comporte une seconde poulie (13) avec un autre tirant (9) qui passe à travers un deuxième trou (10) de l'une des parties laminaires (14), puis passe à travers le trou central (4) de la sangle (7) jusqu'à être fixé dans l'autre deuxième trou (10) de l'autre partie laminaire (14).

14. Bras articulé repliable selon les revendications 10 et 7 dans lequel le tirant (9) est attaché à un premier trou (8) de la seconde section rigide (15), et a une seconde poulie (13) avec un autre tirant (9) qui est inséré à l'intérieur à travers la première section rigide (3), passe à travers l'ouverture centrale (11) du renfort (6) et est fixé dans le deuxième trou (10) de la partie laminaire supérieure (14).

15. Bras articulé repliable selon la revendication 10, dans lequel le tirant (9) passe à travers un premier trou (8) de la première section rigide (3) et est attaché à un premier trou (8) de la seconde section rigide (15), et a la seconde poulie (13) avec un autre tirant (9) qui passe à travers un deuxième trou (10) de l'une des parties laminaires (14), puis passe à travers le trou central (4) de la sangle (7) jusqu'à être fixé dans l'autre deuxième trou (10) de l'autre partie laminaire (14).
